# EUROPEAN PATENT APPLICATION

(11) **EP 2 945 144 A1**
(43) Date of publication of application: **18.11.2015**
(21) Application number: 15165703.8
(22) Date of filing: 29.04.2015
(51) Int. Cl.: G09B 21/00

(54) **TACTILE OBJECT FORMING APPARATUS, METHOD, AND PROGRAM**

(30) Priority: 16.05.2014 JP 2014102573
(71) Applicant: Heishin Ltd., Hyogo 652-0852 (JP)
(72) Inventor: Ichida, Kunihiro, Kobe-shi, Hyogo 652-0852 (JP); Sugino, Yoshihiro, Nagahama-shi, Shiga 529-0261 (JP); Nakazawa, Masaki, Nagahama-shi, Shiga 529-0261 (JP); Fujishima, Nobuyuki, Kobe-shi, Hyogo 652-0852 (JP); Nakagawa, Yumi, Kobe-shi, Hyogo 652-0852 (JP)
(74) Representative: Vossius & Partner Patentanwälte Rechtsanwälte mbB

(57) **Abstract**

A provided apparatus includes: a storage unit configured to store tactile object images of a plurality of types and tactile object information for forming a tactile object corresponding to each of the tactile object images on a target work; a display unit having a first region in which the tactile object image stored in the storage unit can be displayed and a second region in which the tactile object image displayed in the first region can be displayed with a drag-and-drop operation; and a controller configured to, in a case where a first tactile object image having been displayed in the second region of the display unit earlier than a second tactile object image is approached by the second tactile object image dragged and dropped later nearer than a set length, change a display position of the second tactile object image to a position apart from the first tactile object image by the set length.

## Description

### BACKGROUND OF THE INVENTION

### Field of the Invention

The present invention relates to tactile object forming apparatus, method, and program.

### Description of Related Art

As conventional apparatuses for forming braille characters and the like on a sheet of paper and the like, the apparatuses below are known.

JP H10-235939 A discloses an apparatus capable of preparing a document which contains a combination of braille characters and tactile diagrams.

JP H10-235940 A discloses an apparatus capable of changing dot styles in a document which contains a combination of braille characters and tactile diagrams.

JP H10-235988 A discloses an apparatus capable of alerting a user that braille dot spacing is too narrow.

JP 2013-95116 A discloses an apparatus configured to display a work image in a background of a display part on a main screen of a braille data generating apparatus so that a user can put a braille box exactly at a desired position.

However, all of the techniques disclosed in JP H10-235939 A, JP H10-235940 A, JP H10-235988 A, and JP 2013-95116 A are specialized to form a tactile document which contains braille characters, tactile diagrams, or a combination of the braille characters and the tactile diagrams and do not take account of tactility of the formed braille characters and the like.

Further, the apparatus of JP H10-235939 A merely allocates files containing braille characters and tactile diagrams to formats displayed on a setting screen which indicate predetermined divisions such as an upper left part, respectively. Therefore, the final composition of the prepared document is left unclear until the document is really displayed on a display device. In addition, the apparatus requires a user to return to the setting screen to redo the input to change the settings.

JP H10-235940 A only mentions that the apparatus is capable of merely changing dot styles between the braille characters and the tactile diagrams.

The apparatus of JP H10-235988 A merely alerts the user that braille dot spacing is too narrow, still making the user struggle through trial and error to appropriately lay out the braille characters.

The apparatus of JP 2013-95116 A merely allows the user to lay out the braille box while presenting the work image in the background; therefore, the apparatus only allows the user to intuitively set positional relationship between the braille boxes by viewing the screen.

### SUMMARY OF THE INVENTION

It is an object of the present invention to provide an apparatus capable of forming a tactile object of high tactility by allowing a user to make sure, while confirming the real layout of the tactile objects on the screen, that the interval between tactile objects of braille characters, pictograms, and the like is easily felt.

In order to solve the problem mentioned above, the present invention provides a tactile object forming apparatus for forming a tactile object on a target work, including:
a storage unit configured to store tactile object images of a plurality of types and tactile object information for forming a tactile object corresponding to each of the tactile object images on the target work;
a display unit including a first region in which the tactile object image stored in the storage unit can be displayed and a second region in which the tactile object image having been displayed in the first region can be displayed with a drag-and-drop operation; and
a controller configured to, in a case where a first tactile object image displayed in the second region of the display unit earlier than a second tactile object image is approached by the second tactile object image dragged and dropped later nearer than a set length, change a display position of the second tactile object image to a position apart from the first tactile object image by the set length.

With that configuration, the apparatus allows a user to confirm the position in the second region to display the tactile object image on a screen. Further, the apparatus is capable of automatically adjusting the positions of the tactile object images to prevent the tactile object images from being too near to each other. Therefore, the tactile objects on the target work formed by the apparatus are not placed so near to each other that a visually impaired person cannot sense the tactile objects by fingers or that a visually impaired person may have difficulty in sensing the tactile objects by fingers.

It is preferable that the storage unit includes tactile character images corresponding to characters as a part of the tactile object images,
that the display unit includes a character input field for inputting a character to the first region and a character display field for displaying a tactile character image corresponding to the character input to the character input field, and that the controller controls the display unit to display the tactile character image in the second region by dragging and dropping in the second region the tactile character image displayed in the character display field.

With that configuration, the apparatus allows the user to achieve a layout of the tactile objects to be formed on the target work so that the visually impaired person will be able to distinguish the tactile objects from each other by previously displaying tactile character images in a similar manner to the other tactile object images.

It is preferable that the tactile object images stored in the storage unit include line images, and a first line image having been displayed in the second region earlier than a second line image is enabled to be overlapped by the second line image which is to be displayed later when the second line image is dragged from the first region and dropped in the second region.

It is preferable that in a case where a first line image having been displayed in the second region of the display unit earlier than a second line image is approached by the second line image which is to be displayed later in parallel to the first line image and also nearer than a set length, the controller changes at least one piece of height information and line style information of a second line represented by the second line image as the tactile object information to be stored in the storage unit.

With that configuration, the apparatus allows the visually impaired person to distinguish the tactile objects from each other by changing heights or line styles of the tactile objects from each other even if the apparatus enables the line images to be displayed near to each other.

It is preferable that the controller makes a size, a pattern, and an orientation of a tactile object image unchangeable in controlling the display unit to display the tactile object image in the second region.

With that configuration, the apparatus can provide tactile objects that promise the visually impaired person high tactility on condition that the tactile objects are formed on the target work on the basis of the tactile object images displayed in the second region.

It is preferable that the apparatus further includes:
a dispenser for applying resin to the target work; and
a drive unit for moving the dispenser with respect to the target work, and
the controller controls drive of the drive unit based on a prepared tactile diagram draft to form a tactile diagram by applying resin to the target work.

In order to solve the problem mentioned above, the present invention provides, as means, a tactile object forming method for forming a tactile object on a target work, including the steps of:
displaying a tactile object image in a first region of a display unit;
causing the tactile object image to be displayed in a second region of the display unit with a drag-and-drop operation; and
in a case where a first tactile object image having been displayed in the second region of the display unit earlier than a second tactile object image is approached by the second tactile object image dragged and dropped later nearer than a set length, displaying the second tactile object image at a position apart from the first tactile object image by the set length.

It is preferable that the tactile object images include tactile character images corresponding to characters.

It is preferable that the tactile object images include line images, and a first line image having been displayed in the second region earlier than a second line image is enabled to be overlapped by the second line image which is to be displayed later when the second line image is dragged from the first region and dropped in the second region.

It is preferable that, in a case where the first line image having been displayed in the second region of the display unit earlier than the second line image is approached by the second line image which is to be displayed later in parallel to the first line image and also nearer than a set length, at least one piece of height information and line style information of the second line image is changed.

It is preferable that a size, a pattern, and an orientation of the tactile object image are made unchangeable when the tactile object image is displayed in the second region.

The present invention provides a means for solving the problems in the form of a tactile object forming program for causing a computer to execute the steps of: displaying a tactile object image in a first region of a display unit; causing the tactile object image to be displayed in a second region of the display unit in response to a drag-and-drop operation; and
in a case where a first tactile object image having been displayed in the second region of the display unit earlier than a second tactile object image is approached by the second tactile object image dragged and dropped later nearer than a set length, displaying the second tactile object image at a position apart from the first tactile object image by the set length.

According to the present invention, the tactile object image having been displayed in the first region can be displayed at a desired position in the second region with a drag-and-drop operation; therefore, the user can easily set a layout of tactile object images while confirming the layout displayed in the second region. Further, the display position can be automatically adjusted so that the tactile object images to be displayed in the second region do not approach each other nearer than the set length, therefore, the user can avoid setting a layout that may make the visually impaired person difficult to distinguish the tactile objects from each other.

### BRIEF DESCRIPTION OF THE DRAWINGS

Fig. 1 is a schematic block diagram of a tactile object forming apparatus according to the embodiment;
Fig. 2 is a flow chart describing a procedure for preparing a tactile diagram draft by a controller according to the embodiment;
Fig. 3 is a diagram illustrating a tactile diagram draft preparing step presented on a tactile diagram draft preparing screen displayed on a display device illustrated in Fig. 1;
Fig. 4 is a diagram illustrating a tactile diagram draft preparing step presented on a tactile diagram draft preparing screen displayed on a display device illustrated in Fig. 1;
Fig. 5 is a diagram illustrating a tactile diagram draft preparing step presented on the tactile diagram draft preparing screen displayed on the display device illustrated in Fig. 1;
Fig. 6 is a diagram illustrating a tactile diagram draft preparing step presented on the tactile diagram draft preparing screen displayed on the display device illustrated in Fig. 1; and
Figs. 7A-7C are diagram illustrating automatic adjustment for a position of a tactile object image in the tactile diagram draft preparing screen displayed on the display device illustrated in Fig. 1.

### DETAILED DESCRIPTION OF THE PREFERRED EMBODIMENT

An embodiment of the present invention will be described below with reference to the accompanying drawings. The description below is essentially for illustrative purposes only and is not meant to limit the present invention, its application, or its intended purpose. Further, the drawings are schematic and not necessarily to scale.

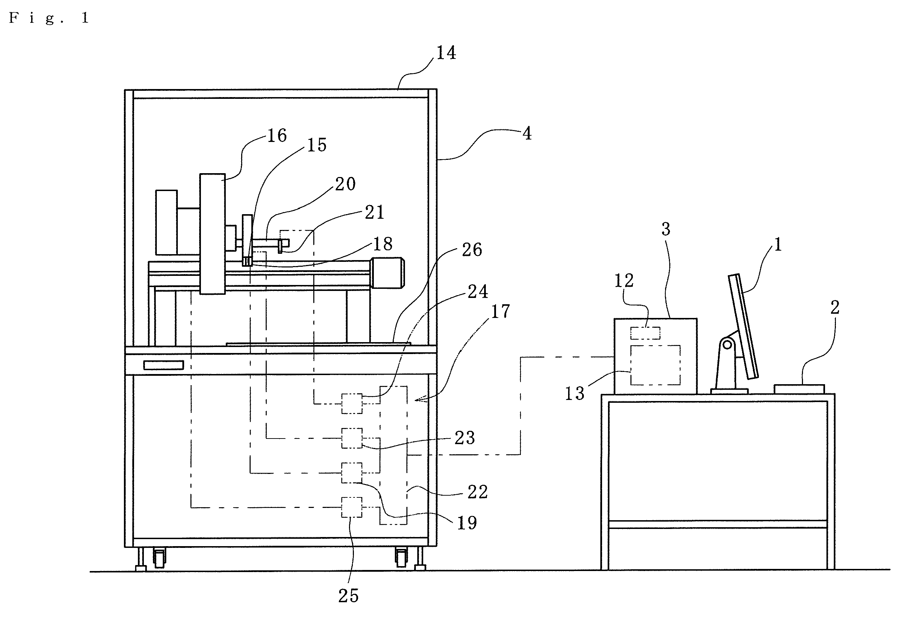

Fig. 1 shows a tactile object forming apparatus according to the embodiment. The tactile object forming apparatus has a display device 1, an input device 2, a controller 3, and an applicator 4.

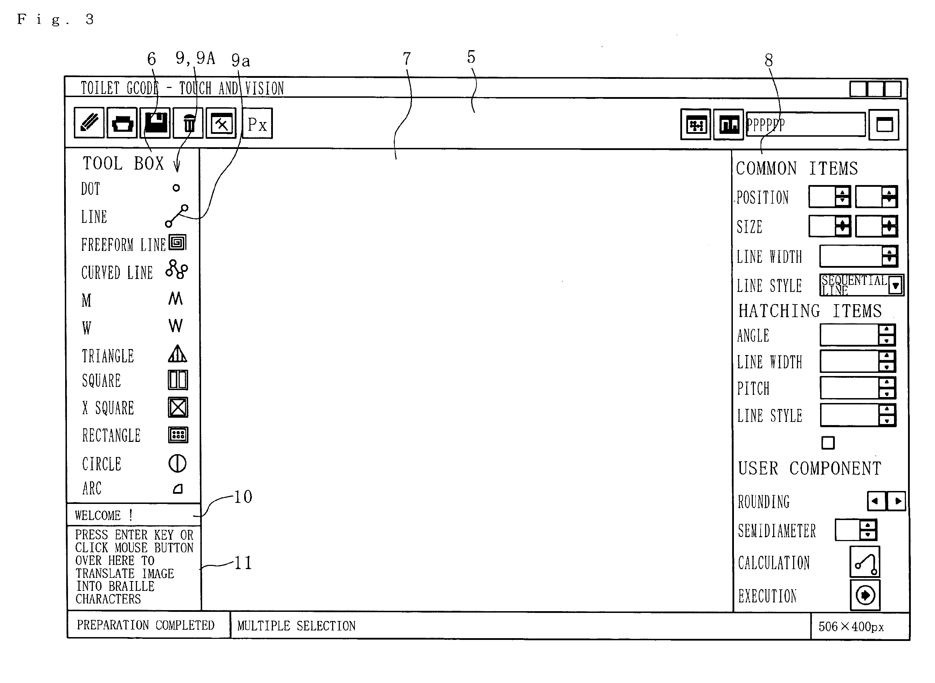

The display device 1 is made of a liquid crystal display or the like and is able to display a tactile diagram draft preparing screen 5 illustrated in Fig. 3. The tactile diagram draft preparing screen 5 has a first region 6 for displaying tactile object images of various types and the like, a second region 7 for preparing a tactile diagram draft in response to a drag-and-drop operation on the tactile object images, and a third region 8 for displaying image information of the tactile object images 9 displayed in the second region 7.

In the first region 6, not only the tactile object images 9 of pictograms, line images, and the like but also a character input field 10, a character display field 11, and so on are displayed.

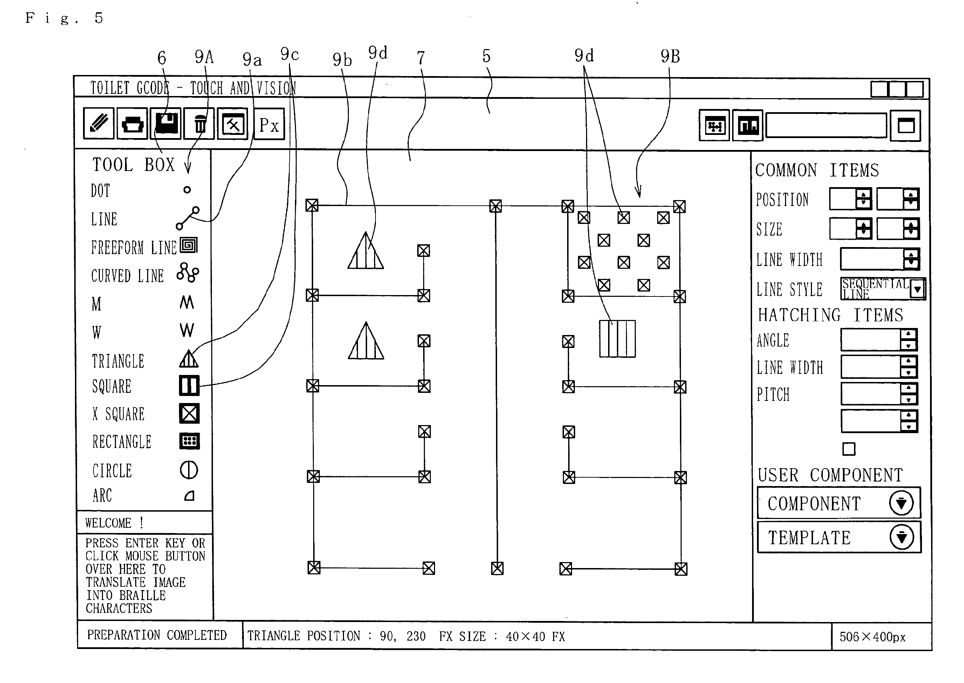

As illustrated in Fig. 5, in the second region 7, first tactile object images 9A having been displayed in the first region 6 (including braille characters having been displayed in the character display field 11) can be displayed with a drag-and-drop operation. A center (a mouse cursor's position) of the dropped second tactile object image 9B displayed with the drag-and-drop operation is aligned with an intersection of grid lines nearest to the dropped position. Incidentally, a space between the grid lines is changeable. Alternatively, a position other than the center of the second tactile object image 9B may be aligned with the intersection of the grid lines or the second tactile object image 9B may be located in accordance with its dropped position irrespective of the grid lines.

The second tactile object images 9B to be displayed in the second region 7 are subject to position adjustment so that they cannot approach each other nearer than a predetermined set length. That is, an area of a certain dimensions is set around each of the second tactile object images 9B as a non-overlap region. In this embodiment, an outer edge of the non-overlap region is set to an outer edge of a perimeter which is 2 mm in width from an outer edge of the second tactile object image 9B. Therefore, even in a case where a user tries to make another image overlap an earlier displayed image in the second region 7 by drag-and-drop, the image being dragged and dropped is forcedly moved to a position where the non-overlap region of the image does not cover the non-overlap region of the earlier displayed image. As a result, the non-overlap regions (a length set as a distance between the outer edges of the images, i.e., 4 mm in this embodiment) are secured between the images.

The pictogram is one of visual signs displayed for showing some kinds of information or caution. In Fig. 3, pictorial signs to be used in a rest room are shown. In this example, a pattern and a size of each pictogram image to be displayed in the second region 7 in response to a drag-and-drop operation are previously set for convenience of braille-reading. Further, the pattern, the size, and an orientation (a position in a rotational direction) of each of the pictogram images are made unchangeable. Information about a line width and a line height of lines forming the respective pictograms is the same for all pictograms.

The line image is made of a straight line, a curved line, and the like. Lengths of the line image displayed in the second region 7 with a drag-and-drop operation can be optionally changed by using a mouse. In the second region 7, the line images can be displayed as overlapping each other. However, the line images displayed in parallel to each other cannot be approached as near as having the space between the line images less than the set length.

The display device 1 is configured to allow the user to input characters to the character input field 10 by using a keyboard or the like. In the character display field 11, tactile character images corresponding to characters input to the character input field 10 are displayed. The tactile character images include braille character images, and embossed character images, and so on. However, the tactile character images are exemplified only by the braille character images below. When at least two characters have been input to the character input field 10, the corresponding two or more successive braille character images are displayed in the character display field 11. The displayed braille character images can be displayed in the second region 7 with a drag-and-drop operation. The braille character image has the non-overlap region extending from its outer edge similar to the pictogram (since a whole square part enclosing a braille character is regarded as the braille character image, a peripheral region of the square part is the non-overlap region). Therefore, the braille character image cannot overlap the tactile object image 9 including a braille character image having been displayed earlier in the second region 7, if any. In that case, a display position of the braille character image is moved to a position apart from the earlier displayed tactile object image 9 by at least a set length.

The character input field 10 is a field to which a character for generating the braille character image is input. The character input by the user from the keyboard or the like is displayed in the character input field 10. In the character display field 11, the braille character image corresponding to the character input to the character input field 10 is displayed. The displayed braille character image can be displayed in the second region 7 with a drag-and-drop operation.

In the third region 8, information common to the respective tactile object images 9 to be displayed in the second region 7 is displayed. Specifically, the position of the tactile object image 9 (a center position of the image in an x-coordinate and a y-coordinate), the size, the line width and the line type of the tactile object image 9, information about hatching, and so on are displayed in the third region 8.

The input device 2 is for inputting various types of data, instructions, and the like such as a keyboard, a mouse, and a scanner. The keyboard is provided mainly for inputting a character to the character input field 10 of the display screen. The mouse is provided mainly for displaying the tactile object image 9 in the second region 7 by performing the drag-and-drop operation on the tactile object image 9 from the first region 6 to the second region 7. The scanner is provided for scanning, for example, a diagram to be the tactile diagram draft which the user desires to prepare.

The controller 3 has a storage device 12 and a central processing unit (CPU) 13. The storage device 12 includes a hard disk, a main memory, a USB memory, an SD card, and the like. The hard disk stores a tactile object forming program described below, a data table that contains the tactile object images 9 of various types, and tactile object information for forming the tactile object corresponding to each of the tactile object images 9 on a target work 26 in association with each other. The pictograms with the sizes and the like made unchangeable in consideration of tactility have been stored as the tactile object images 9. The tactile object forming apparatus is also configured to allow the user to optionally create the tactile object image by scanning an image with the scanner or the like or creating an image by using graphics software or the like. The tactile object information is configured in a data translation table which is for translating the tactile object image 9 into the tactile object. With the data translation table, the tactile object forming apparatus allows the user to add line style information and height information to each line segment forming the tactile object image 9, to set the non-overlap region having a certain area enclosing the region corresponding to the tactile object image 9 to the tactile object image 9, and to set the center position for dragging and dropping the respective tactile object images 9, for example.

The central processing unit 13 executes the tactile object forming program stored in the hard disk to prepare the tactile diagram draft on the screen of the display device 1 and also transmits a control signal to the applicator 4 based on the prepared tactile diagram draft to control the applicator 4 to perform application as described later.

The applicator 4 has a dispenser 15, a drive unit 16, various types of controllers 17, and so on provided in a frame body 14.

The dispenser 15 is configured to supply a translucent ultraviolet curable resin material on a predetermined quantity basis and is implemented by a uniaxial eccentric screw pump in this embodiment. Although not illustrated in the drawings, the uniaxial eccentric screw pump is provided with a stator and a rotor inserted in the stator. The stator has a cylindrical shape with an internal thread of a predetermined pitch formed in a flow direction from a suction opening to a discharge opening. The rotor has a form of an external thread and is inserted in the internal thread of the stator to form a transfer space with an inside surface of the stator. The rotor positively rotates while touching the inside surface of the stator to push a fluid from the suction opening side to the discharge opening side through the transfer space. Further, the rotor is configured to prevent the fluid from dripping by counter rotation. The rotor is driven to rotate by a motor. The drive of the motor is controlled by a dispenser controller 23 on the basis of a control signal from the controller 3.

The dispenser 15 implemented by the uniaxial eccentric screw pump of the above described configuration can discharge the resin material on a predetermined quantity basis without fail and apply the resin material to a dot, a line, or a surface on a target work 26.

The drive unit 16 is for moving a supporting arm 20 which supports the dispenser 15 in directions of x-axis, y-axis, and z-axis and is implemented by a three-axle articulated robot in this embodiment. An ultraviolet curing unit 21 is attached to the supporting arm 20 to irradiate the resin on the target work 26 which has been applied by the dispenser 15 with ultraviolet rays and to cure the resin. The drive unit 16 moves the dispenser 15 to a predetermined position by causing a robot controller 25 to control an unshown motor based on a control signal from the controller 3.

The controllers 17 include a system controller 22, a dispenser controller 23, an ultraviolet curing unit controller 24, and a robot controller 25. The system controller 22 transmits and receives signals to and from the controller 3 and outputs control signals to the other controllers 17. In response to the control signal from the system controller 22, the dispenser controller 23 controls a rotational speed and a direction of rotation of the rotor in the dispenser 15. In response to the control signal from the system controller 22, the ultraviolet curing unit controller 24 controls an irradiation state of the ultraviolet curing unit 21. In response to the control signal from the system controller 22, the robot controller 25 controls drive of the three-axle articulated robot to move the dispenser 15 to the predetermined position.

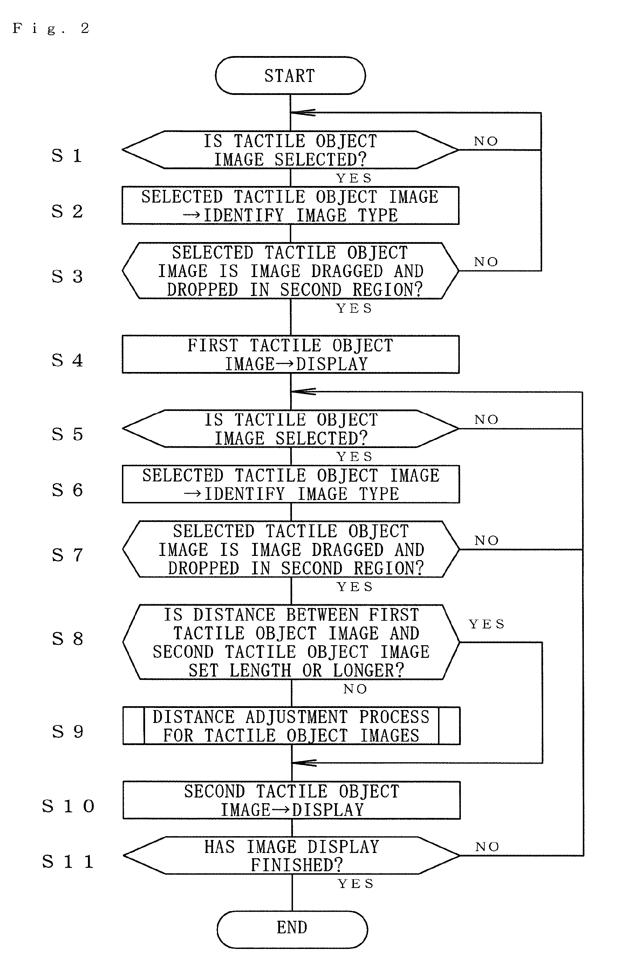

Herein, an operation of the tactile object forming apparatus having the above described configuration will be described with reference to the flow chart shown in Fig. 2.

In the event that the tactile diagram draft is to be prepared, it is determined which one of the tactile object images 9 including the pictogram or the line image is selected by a mouse operation (left click) in the first region 6 on the tactile diagram draft preparing screen 5 of the display device 1 (step S1). Incidentally, on condition that the first tactile object image has been displayed in the second region 7 in step S4 described below, the displayed first tactile object image is added to options for the selection of the tactile object image 9.

In a case where a specific one of the tactile object images 9 has been selected by a mouse operation, the type of the selected tactile object image 9 is identified (step S2). In this embodiment, it is identified if the selected tactile object image 9 is the pictogram, the line or the braille character. Then, it is determined whether the selected tactile object image 9 is dragged and dropped in the second region 7 or not (step S3). Herein, the center position of the dragged and dropped tactile object image 9 (the first tactile object image) with the intersection of grid lines nearest to the dropped position is aligned (step S4). However, a position other than the center of the tactile object image 9 may be aligned with the intersection of the grid lines or the tactile object image 9 may be located in accordance with its dropped position without regard of the grid lines.

Subsequently, similar to the steps S1 through S3, it is determined which one of the tactile object images 9 is selected by a mouse operation (left click) (step S5), then the type of the selected tactile object image 9 is identified (step S6), and it is determined whether the selected tactile object image 9 is dragged and dropped in the second region 7 or not (step S7).

Then, it is determined whether a distance between the first tactile object image having been displayed earlier in the second region 7 (the outer edge of the individual pattern), and the second tactile object image to be displayed next (the outer edge of the individual pattern) is at least a set length or not (step S8). Next, in a case where the distance between the first tactile object image and the second tactile object image is less than the set length, a distance adjustment process for tactile object images as described below is performed (step S9).

In the distance adjustment process for tactile object images, the set length is decided according to Table 1 below based on a difference between the types of the first tactile object image and the second tactile object image.

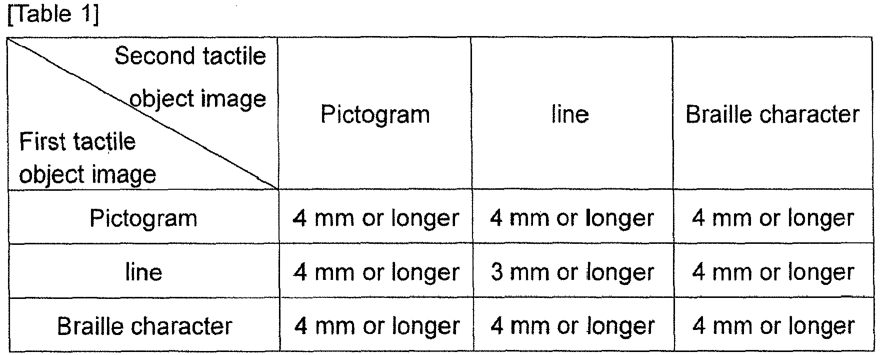

That is, for the combinations of the first tactile object image and the second tactile object image at least one of which is not the line image, the set length is 4 mm. In this case, the non-overlap region extending 2 mm from the outer edge is set to a perimeter of each image, so that the distance between the outer edges of the images does not fall within 4 mm or less. On the other hand, for the first tactile object image and the second tactile object image both of which are the line images, the set length is 3 mm. However, these set lengths are limited to a case where both of the line images are placed in parallel to each other. Therefore, it is possible to place the lines across each other (including a case of placing an end of one of the lines on an end of the other line).

When the second tactile object image is dragged and dropped to a position where the second tactile object image approaches the first tactile object image with a distance less than the set length, it is determined whether the set length can be secured between the images in a case where the second tactile object image is displayed so that the center position of the second tactile object image is positioned at the intersection of the grid lines nearest to the dropped position. In a case where it is determined that the set length can be secured, the second tactile object image is displayed at the aligned position. In a case where it is determined that the set length cannot be secured, the same process consecutively for intersections of the grid lines which are next nearest to the dropped position is repeated until it is determined that the set length can be secured. However, it is possible to locate the second tactile object image in a nearest position at which the second tactile object image avoids the non-overlap region irrespective of the grid lines.

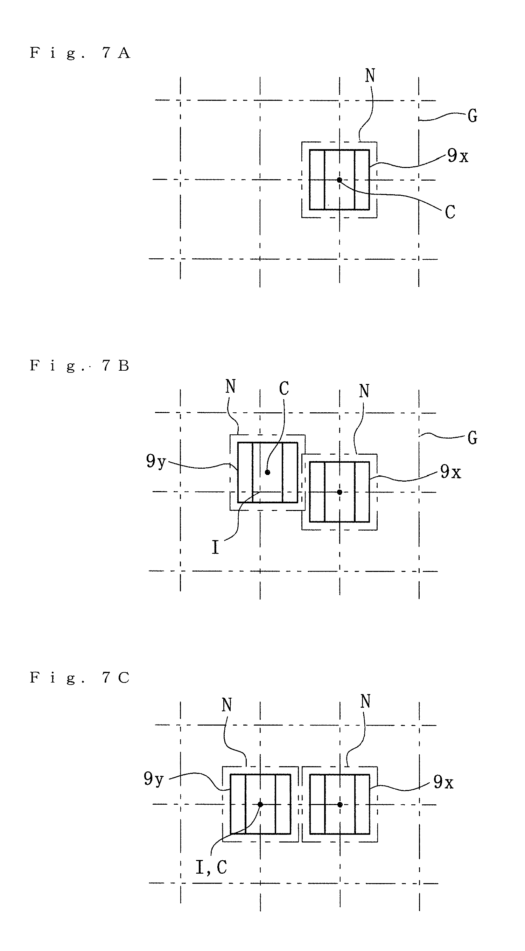

For example, as illustrated in Fig. 7A, the non-overlap region N is formed for the first tactile object image 9x displayed in the second region 7. As illustrated in Fig. 7B, the similar non-overlap region N is also formed for the second tactile object image 9y which is to be dragged and dropped on the first tactile object image 9x. As a result, when the second tactile object image 9y is dragged and dropped to a position where the second tactile object image 9y approaches the first tactile object image 9x with a distance less than the set length as illustrated in Fig. 7B, the position of the second tactile object image 9y to align the center position C of the second tactile object image 9y with the intersection I of the grid lines G nearest to the dropped position is automatically adjusted as illustrated in Fig. 7C.

In that manner, the second tactile object image at the dropped position is displayed in a case where the distance between the first tactile object image and the second tactile object image is the set length or longer, and the second tactile object image at the position decided in the distance adjustment process for tactile object images is displayed in a case where the distance is shorter than the set length, respectively (step S10).

Thereafter the steps S5 to S10 is repeated by recognizing all of the tactile object images 9 having been displayed in the second region 7 as the first tactile object images and recognizing the new tactile object image 9 to be displayed as the second tactile object image. Incidentally, when the first tactile object image having been displayed in the second region 7 is dragged, that is the left mouse button is clicked over the first tactile object image to change the position of the first tactile object image, on condition that at least another tactile object image 9 is displayed in the second region 7, the dragged first tactile object image is treated as the second tactile object image and all the other tactile object images are treated as the first tactile object images. Further, it is possible to perform other kinds of processing including extension of the line by clicking a mouse button over an end of the line.

When the tactile object images 9 have been completely displayed in the second region 7 as described above (step S11), the preparation of the tactile diagram draft is finished. Then, information about the prepared tactile diagram draft is stored and the information is transmitted to the applicator 4 to form the tactile diagram by causing the applicator 4 to apply the resin to a surface to be coated of the target work 26.

In the tactile diagram draft to be prepared in the above described manner, the positions of the tactile object images 9 are automatically adjusted so that the tactile object images 9 do not approach excessively near to each other at the stage of displaying the tactile object images 9 on the screen. Therefore, parts to which the resin is applied by the applicator 4 do not approach so near that a visually impaired person can sense the formed tactile objects.

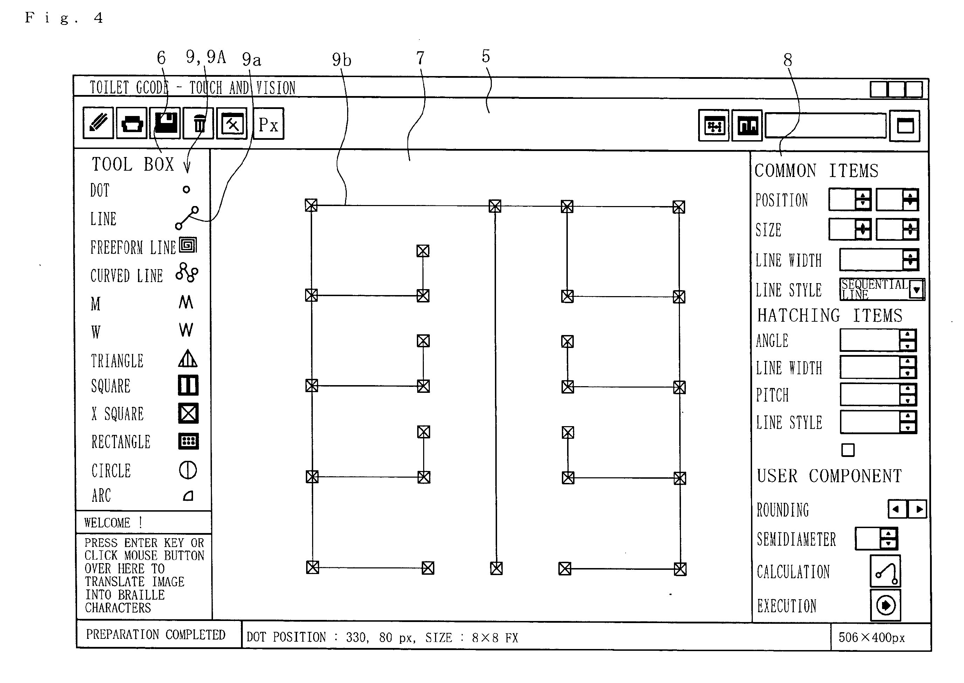

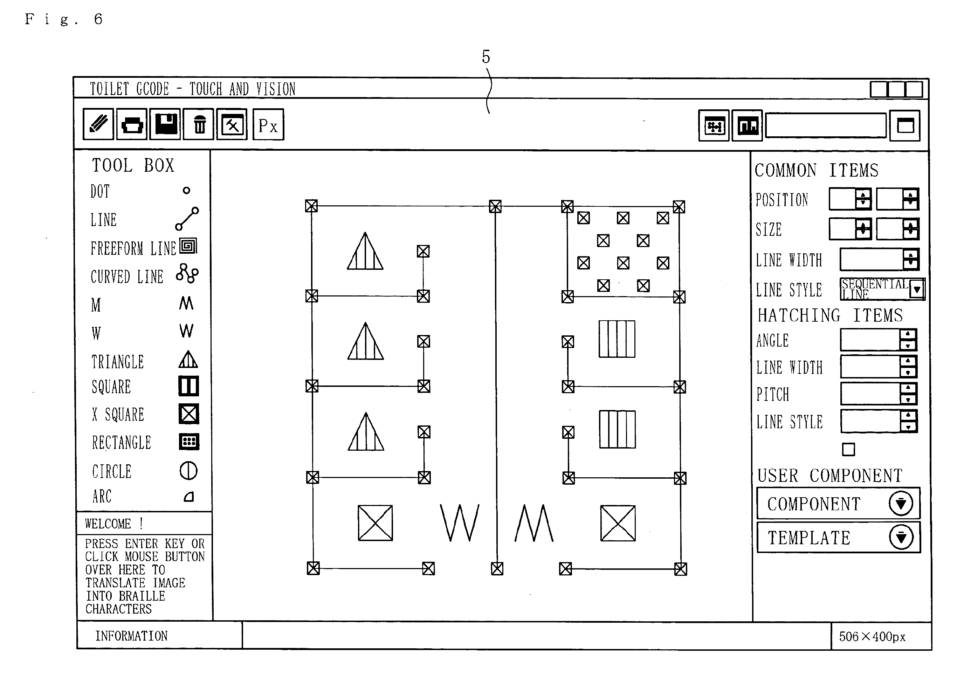

Fig. 3 to Fig. 6 illustrate the tactile diagram draft preparing screens 5 showing the respective steps of preparing the tactile diagram draft for a rest room. Fig. 3 illustrates a state in which the line 9a (straight line) is selected from the first tactile object images 9A from the first region 6 (tool box). Fig. 4 illustrates a layout of the whole rest room made of the line 9a (straight line) selected in Fig. 3. Unless the line images 9b are placed in parallel to each other, the line images 9b can be placed across each other. In Fig. 4, the line images 9b are placed with an end of one of the line images being place on an end of the other line image. Fig. 5 illustrates a state in which the respective tactile object images 9 are being pasted on the layout image illustrated in Fig. 4, and specifically, illustrates the pictogram images 9d which are displayed as the second tactile object images 9B in the second region 7 by dragging and dropping a dot, and the pictograms 9c including a triangle and a square, each of which is selected from the first region 6. Fig. 6 illustrates a rest room layout which is completed as a result of addition of the pictograms of M, W, and X square.

In the case of displaying the various types of the tactile object images 9 successively in Fig. 5 and Fig. 6, it is only needed to drag the tactile object image 9 to move it to an approximate position at which the user desires to display the tactile object image 9 and drop the tactile object image 9 at the position. As described above, the position of the tactile object image 9 is automatically aligned with the intersection of the grid lines nearest to the dropped position. However, it is possible to display the tactile object image 9 at the dropped position without regard of the grid lines. Therefore, it is possible to easily display the tactile object image 9 at a desired position. Further, in a case where the tactile object image 9 has been displayed at a position to which the user is dragging and dropping a new tactile object image 9, it is possible to adjust the position of the new tactile object image 9 to prevent the tactile object images 9 from overlapping. Moreover, it is possible to adjust the position of the new tactile object image 9 to secure the set length or longer between the earlier displayed tactile object image 9 and the new tactile object image 9. Furthermore, the distance between the tactile objects formed on the basis of the tactile object images 9 is long enough for the visually impaired person to distinguish the tactile objects from each other by fingers.

In the tactile diagram draft for a rest room illustrated in Fig. 6 which is completed in the above described manner, each element is represented by a very simplified figure. As a result, the tactile objects formed by the applicator 4 on the basis of the tactile diagram draft for a rest room are easily recognized by the visually impaired person. Further, the tactile objects are apart from each other by a distance longer than the set length that has been previously decided as a distance between the tactile object images 9 when the tactile object images 9 are displayed in the second region 7. As a result, it is far from impossible for the visually impaired person to distinguish even the adjacent tactile objects from each other.

The present invention is not limited to the above described embodiment and may be subject to various modifications.

For example, although the tactile object image 9 is displayed in the second region 7 only with the direct drag-and-drop operation in the above embodiment, it is possible to prepare the tactile diagram draft by having an original diagram for the draft to be prepared previously scanned in the second region 7 with a scanner or the like and causing the respective tactile object images 9 to be displayed consecutively on image data of the original diagram. Incidentally, the original diagram may be a diagram, a document, or the like intended for a sighted person.

As a result, it is possible to lay out the tactile objects by referencing the original diagram. Further, it is possible to lay out the tactile objects at positions different from those in the original diagram. In this case, even in a case of forming the tactile objects on the original diagram by the applicator 4 on the basis of the completed tactile diagram draft, the tactile objects are made of transparent ultraviolet curable resin. Therefore, the tactile objects do not affect visibility of the original diagram for the sighted person. On the other hand, the tactile objects allow the visually impaired person to recognize their forms by fingers. That is, the original diagram and the tactile objects secure good recognition for the sighted person and the visually impaired person, respectively.

Further, although the display position is only automatically adjusted to prevent the tactile object images from approaching too near to each other in the above embodiment, the lines can be also displayed nearer in a case where the lines are adjacent in parallel to each other. In this case, the height information or the line style information of the adjacent lines is changed. For example, in a case where the line images are displayed in parallel to each other with a space between the line images less than the set length, a process of giving the line images different height information or a process of giving the line images different line style information is performed by, for example, leaving one of the line images in a solid line and changing the other line image to a dotted line, or both of the processes. As a result, when the resin is applied to the target work by the applicator 4, the visually impaired person can distinguish the lines from each other even though the space between the line images is made short. Further, it is possible to output an error message on condition that the tactile object images approach too near to each other. For example, it is only needed to display an alert screen at a moment when the tactile object images approach too near or change a display color of the tactile object images concerned (one or both of the first tactile object image and the second tactile object image).

## Claims

1. A tactile object forming apparatus for forming a tactile object on a target work, comprising:
a storage unit configured to store tactile object images of a plurality of types and
tactile object information for forming a tactile object corresponding to each of the tactile object images on the target work;
a display unit comprising a first region in which the tactile object image stored in the storage unit can be displayed and a second region in which the tactile object image having been displayed in the first region can be displayed with a drag-and-drop operation; and
a controller configured to, in a case where a first tactile object image displayed in the second region of the display unit earlier than a second tactile object image is approached by the second tactile object image dragged and dropped later nearer than a set length, change a display position of the second tactile object image to a position apart from the first tactile object image by the set length.

2. The tactile object forming apparatus according to claim 1, wherein the tactile object images stored in the storage unit includes tactile character images corresponding to characters,
the display unit comprises a character input field for inputting a character to the first region and a character display field for displaying a tactile character image corresponding to the character input to the character input field, and
the controller controls the display unit to display the tactile character image in the second region by dragging and dropping in the second region the tactile character image displayed in the character display field.

3. The tactile object forming apparatus according to claim 1 or 2, wherein the tactile object images stored in the storage unit include line images, and a first line image having been displayed in the second region earlier than a second line image is enabled to be overlapped by the second line image which is to be displayed later when the second line image is dragged from the first region and dropped in the second region.

4. The tactile object forming apparatus according to claim 3, wherein in a case where a first line image having been displayed in the second region of the display unit earlier than a second line image is approached by the second line image which is to be displayed later in parallel to the first line image and also nearer than a set length, the controller changes at least one piece of height information and line style information of a second line represented by the second line image as the tactile object information to be stored in the storage unit.

5. The tactile object forming apparatus according to any one of claims 1 to 4, wherein the controller makes a size, a pattern, and an orientation of a tactile object image unchangeable in controlling the display unit to display the tactile object image in the second region.

6. The tactile object forming apparatus according to any one of claims 1 to 5, further comprising:
a dispenser for applying resin to the target work; and
a drive unit for moving the dispenser with respect to the target work,
wherein the controller controls drive of the drive unit based on a prepared tactile diagram draft to form a tactile diagram corresponding to the tactile diagram draft by applying resin to the target work.

7. A tactile object forming method for forming a tactile object on a target work, comprising the steps of:
displaying a tactile object image in a first region of a display unit;
causing the tactile object image to be displayed in a second region of the display unit with a drag-and-drop operation; and
in a case where a first tactile object image having been displayed in the second region of the display unit earlier than a second tactile object image is approached by the second tactile object image dragged and dropped later nearer than a set length, displaying the second tactile object image at a position apart from the first tactile object image by the set length.

8. The tactile object forming method according to claim 7, wherein the tactile object images include tactile character images representing tactile characters corresponding to characters.

9. The tactile object forming method according to claim 7 or 8, wherein the tactile object images include line images, and a first line image having been displayed in the second region earlier than a second line image is enabled to be overlapped by the second line image which is to be displayed later when the second line image is dragged from the first region and dropped in the second region.

10. The tactile object forming method according to claim 9, wherein, in a case where the first line image having been displayed in the second region of the display unit earlier than the second line image is approached by the second line image which is to be displayed later in parallel to the first line image and also nearer than a set length, at least one piece of height information and line style information of the second line image is changed.

11. The tactile object forming method according to one of claims 6 to 10, wherein a size, a pattern, and an orientation of the tactile object image is made unchangeable when the tactile object image is displayed in the second region.

12. A tactile object forming program for causing a computer to execute the steps of:
displaying a tactile object image in a first region of a display unit;
causing the tactile object image to be displayed in a second region of the display unit in response to a drag-and-drop operation; and
in a case where a first tactile object image having been displayed in the second region of the display unit earlier than a second tactile object image is approached by the second tactile object image dragged and dropped later nearer than a set length, displaying the second tactile object image at a position apart from the first tactile object image by the set length.
